Europäisches Patentamt

European Patent Office

Office européen des brevets

(19)

(11) Veröffentlichungsnummer: **0 253 211 B1**

# (12) EUROPÄISCHE PATENTSCHRIFT

(45) Veröffentlichungstag der Patentschrift: **30.09.92**

(21) Anmeldenummer: **87109496.7**

(22) Anmeldetag: **02.07.87**

(51) Int. Cl.5: **C08K 13/02**, C08L 33/10, C08F 2/44, //(C08K13/02,3:22, 5:00,5:54)

(54) **Aluminiumhydroxid-gefüllte Giessharze auf Basis von Methacrylsäureestern und daraus hergestellte Kunststoffgegenstände und Form-Körper.**

(30) Priorität: **17.07.86 DE 3624142**

(43) Veröffentlichungstag der Anmeldung:
**20.01.88 Patentblatt 88/03**

(45) Bekanntmachung des Hinweises auf die Patenterteilung:
**30.09.92 Patentblatt 92/40**

(84) Benannte Vertragsstaaten:
**AT BE DE ES FR GB IT NL SE**

(56) Entgegenhaltungen:
**EP-A- 0 107 764**
**FR-A- 2 074 827**
**FR-A- 2 273 040**

(73) Patentinhaber: **HÜLS AKTIENGESELLSCHAFT**
**Paul-Baumann-Strasse 1**
**W-4370 Marl 1(DE)**

(72) Erfinder: **Amort, Jürgen, Dr.**
**Ubierstrasse 9**
**W-5210 Troisdorf-Sieglar(DE)**
Erfinder: **Hanisch, Horst, Dr.**
**Fröbelweg 19**
**W-5202 Hennef/Sieg(DE)**
Erfinder: **Klapdor, Ute**
**Zum alten Tor 11**
**W-5210 Troisdorf(DE)**
Erfinder: **Peeters, Hermann, Dr.**
**Farnweg 60**
**W-5200 Siegburg(DE)**

## Beschreibung

Gegenstand der vorliegenden Erfindung sind aluminiumhydroxid- oder aluminiumoxidhydrat-gefüllte Gießharze auf Basis von Methacrylsäureestern und daraus hergestellte Kunststoffgegenstände und Formkörper.

Kunststoffgegenstände und Formkörper aus aluminiumhydroxid- oder aluminiumoxidhydrat-gefüllten Gießharzen auf Basis von Methacrylsäureestern sind bekannt (vgl. DE-PS 20 06 197). Solche Kunststoffgegenstände und Formkörper sind durch Flammfestigkeit, besondere optische Eigenschaften und Säurebeständigkeit ausgezeichnet.

Es ist weiter bekannt, Gießharzen auf Basis von Methacrylsäureestern, die mit silikatischen Füllstoffen gefüllt sind, Organosiliciumverbindungen und weitere Additive hinzuzufügen. Dadurch werden die Verarbeitungseigenschaften dieser Harze und die Gebrauchseigenschaften der daraus hergestellten Kunststoffgegenstände und Formkörper deutlich verbessert (vgl. DE-PS 24 49 656 und EP-A1-0 107 764).

Die Verarbeitungseigenschaften von aluminiumhydroxid-bzw. aluminiumoxidhydrat-gefüllten Gießharzen auf Basis von Methacrylsäureestern und die Gebrauchseigenschaften von daraus hergestellten Kunststoffgegenständen und Formkörpern werden durch bekannte Organosiliciumverbindungen und sonstige Additive nicht oder nur unzureichend verbessert.

Für die breite Anwendung von aluminiumhydroxid- bzw. aluminiumoxidhydrat-gefüllten Gießharzen auf Basis von Methacrylsäureestern ist ein hoher Füllgrad bei gleichzeitig niedriger Viskosität erforderlich. Ein hoher Füllgrad garantiert die Flammfestigkeit der aus den Harzen hergestellten Kunststoffgegenstände und Formkörper und mindert den Schrumpf bei der Aushärtung der Harze auf ein akzeptables Maß. Eine niedrige Viskosität ist erforderlich, um auch geometrisch anspruchsvolle Kunststoffgegenstände und Formkörper fertigen zu können. Weiter ist für eine breite Anwendung erforderlich, daß Kunststoffgegenstände und Formkörper, die aus aluminiumhydroxid- bzw. aluminiumoxidhydrat-gefüllten Gießharzen auf Basis von Methacrylsäureestern hergestellt sind, auch bei einer Dauerbelastung ihre Gebrauchseigenschaften, wie Kochfestigkeit, Säurebeständigkeit und mechanische Eigenschaften behalten. In vielen Fällen ist auch ein höheres Niveau der mechanischen Eigenschaften erforderlich.

Es bestand somit die Aufgabe, für die bekannten aluminiumhydroxid- bzw. aluminiumoxidhydrat-gefüllten Gießharze auf Basis von Methacrylsäureestern ein Additiv aufzufinden, das sowohl rheologisch wirksam ist als auch als Haftvermittler wirkt.

In Erfüllung dieser Aufgabe wurden aluminiumhydroxid-oder aluminiumoxidhydrat-gefüllte Gießharze auf Basis von Methacrylsäureestern gefunden, die sowohl als rheologische als auch als Haftvermittler wirksame Zusätze mindestens je

a) eine Organosiliciumverbindung mit einer ethylenisch ungesättigten Gruppe,

b) einen Kieselsäureester und

c) eine organische Metallsäureverbindung, insbesondere einen Metallsäureester, eine Metallsäurekomplexverbindung oder ein Metallacylat von Metallen der IV. und/oder V. Nebengruppe des Periodischen Systems

enthalten.

Die erfindungsgemäßen aluminiumhydroxid- bzw. aluminiumoxidhydrat-gefüllten Gießharze besitzen überraschenderweise im unausgehärteten Zustand Viskositäten, die beachtlich niedriger sind als die Viskositäten der bekannten analogen Gießharze ohne Zusatz der beanspruchten Komponenten. Die aus den erfindungsgemäßen Gießharzen hergestellten Kunststoffgegenstände und Formkörper haben deutlich bessere mechanische und optische Eigenschaften als analoge Gießharze ohne den Zusatz der beanspruchten Komponenten, die auch bei lang andauernder Kochwasserbelastung nahezu erhalten bleiben. Wenn nur eine der Komponenten des beanspruchten Gemisches im Gießharz enthalten ist, dann zeigt dieses die bekannten unzureichenden Verarbeitungseigenschaften der aluminiumhydroxid-oder aluminiumoxidhydrat-gefüllten Gießharze; aus diesen Harzen hergestellte Kunststoffgegenstände und Formkörper besitzen die bekannten unzureichenden Gebrauchseigenschaften. Es liegt damit ein synergistischer Effekt zwischen den beanspruchten Verbindungsgruppen vor.

Die einzusetzende Menge an Organosiliciumverbindung, Kieselsäureester und organischer Metallsäureverbindung ist sehr gering. Sie wird praktischerweise auf den Aluminiumhydroxid- bzw. Aluminiumoxidhydrat-Anteil des Gießharzes bezogen, der in weiten Grenzen variierbar ist. Die Organosiliciumverbindung wird im allgemeinen in Mengen zwischen 0,2 und 1,5 Gew.-%, der Kieselsäureester in Mengen zwischen 0,2 und 2 Gew.-% und die organische Metallsäureverbindung in Mengen zwischen 0,2 und 0,8 Gew.-% eingesetzt. Der Anteil der einzelnen Verbindungen bzw. Verbindungsgruppen in dem Gießharz kann auch höher sein. Dadurch wird jedoch eine wesentliche Verbesserung des gewünschten Effektes nicht mehr bewirkt.

2

Aus den Mengenbereichen ist abzuleiten, daß das Verhältnis von Organosiliciumverbindung zu Kieselsäureester und organischer Metallsäureverbindung in den gegebenen Grenzen variiert werden kann. Das Optimum ist jeweils für ein spezifisches Gießharz in Vorversuchen festzulegen.

Organosiliciumverbindungen mit einer ethylenisch ungesättigten Gruppe, die auch als ungesättigte Organosilane bezeichnet werden, sind solche Tri- und Dialkoxysilane, deren organofunktioneller Rest eine CC-Doppelbindung enthält. Diese Doppelbindung ist über ein Kohlenstoffatom direkt mit dem Si-Atom verknüpft, wie z.B. in den Vinyltrialkoxysilanen. Die CC-Doppelbindung kann jedoch auch über ein oder mehrere C-Atome von dem Si-Atom getrennt sein, wie z.B. in den Allyltrialkoxysilanen oder den 3-Methacryloxypropyltrialkoxysilanen. Auch die korrespondierenden Dialkoxysilane können eingesetzt werden, wobei an dem Si-Atom entweder ein zweiter organofunktioneller Rest mit einer CC-Doppelbindung (der im allgemeinen der gleiche Rest wie der erste organofunktionelle Rest ist) oder ein Alkylrest, der vorzugsweise 1 bis 4 C-Atome aufweist, gebunden ist. Die Alkoxygruppe der ungesättigten Organosilane hat vorzugsweise bis zu 4 C-Atome. Die Kohlenstoffkette kann durch ein Ether-Sauerstoffatom unterbrochen sein.

Beispiele für Organosiliciumverbindungen mit einer ethylenisch ungesättigten Gruppe sind: Vinyltrimethoxysilan, Vinyltriethoxysilan, Vinyl-tris-methoxyethoxysilan, Divinyldimethoxysilan, Vinylmethyldimethoxysilan, 3-Methacryloxypropyltrimethoxysilan, 3-Methacryloxypropylmethyldimethoxysilan, 3-Methacryloxypropyl-tris-methoxyethoxysilan.

Die einsetzbaren Kieselsäureester umfassen die monomeren Tetraalkoxysilane und deren Polymere. Die Alkoxygruppen haben vorzugsweise bis zu 4 C-Atome. Die Kohlenstoffkette kann durch ein Ether-Sauerstoffatom unterbrochen sein. Unter polymeren Alkoxysilanen sollen die durch Teilkondensation der monomeren Tetraalkoxysilane erhaltenen Produkte verstanden werden.

Zu den erfindungsgemäß einsetzbaren Verbindungen dieser Gruppe zählen Tetraethylorthosilikat, Tetrapropylorthosilikat, Tetraethylglykolsilikat, Ethylpolysilikat, das auch als Ethylsilikat 40 bezeichnet wird und einen $SiO_2$-Gehalt von etwa 40 % besitzt.

Die einsetzbaren organischen Metallsäureverbindungen umfassen die Ester der Metallsäuren von Metallen der IV. und V. Nebengruppe des Periodischen Systems der Elemente, hauptsächlich Titan-, Zirkon- und Vanadinsäureester. Die Esterkomponente kann 1 bis 18 C-Atome haben und sich sowohl von aliphatischen Alkoholen als auch von ggf. alkylsubstituierten Phenolen ableiten. Auch gemischte Ester können eingesetzt werden.

Zu den erfindungsgemäß einsetzbaren Verbindungen zählen Methyltitanat, Ethyltitanat, Butyltitanat, Butylpolytitanat, Nonyltitanat, Cetyltitanat, Tributyl-Oleyltitanat, Kresyltitanat, Kresylpolytitanat, Propylzirkonat, Butylzirkonat, Ethylvanadat, Butylvanadat.

Aus dieser Aufstellung geht hervor, daß auch die entsprechenden polymeren Ester eingesetzt werden können, sofern diese beständig sind. Als gemischte Ester können auch solche eingesetzt werden, bei denen eine oder mehrere Alkoxygruppen durch einen Komplexbildner, der mit dem zentralen Metallatom über Haupt- und/oder Nebenvalenzen gebunden ist, ersetzt sind. Beispiele für solche Komplexbildner sind Acetylaceton, Acetessigester oder Ethanolamine, beispielsweise enthalten im Diisopropoxy-bis-(2,4-pentandionato)-zirkon oder Diisopropoxy-bis-(2,4-pentandionato)-titan (IV), das auch unter der Bezeichnung Titanacetylacetonat bekannt ist.

Auch andere Metallsäurekomplexverbindungen, die keine Estergruppierung mehr enthalten, lassen sich einsetzen, wie z.B. Tris-(2,4-pentandionato)-vanadium (III) oder Oxy-bis-(2,4-pentandionato)-vanadium (IV).

Die einsetzbaren organischen Metallsäureverbindungen umfassen auch die Acylate von Metallen der IV. und V. Nebengruppe des Periodischen Systems der Elemente, hauptsächlich Titan-, Zirkon- und Vanadinacylate. Das Acylatradikal kann von gerade- oder verzweigtkettigen aliphatischen oder cycloaliphatischen oder aromatischen Carbonsäuren mit bis zu 20 Kohlenstoffatomen abgeleitet sein. Die Kohlenstoffkette kann gesättigt oder ungesättigt sein und Substituenten, wie z.B. Hydroxylgruppen, enthalten. Ebenfalls umfassen die Acylate Produkte, die am Metallatom Alkoxy- und Acylatgruppen enthalten, oder Polymere, die als Teilkondensate der monomeren Acylate aufgefaßt werden können. Beispiele solcher erfindungsgemäßen Acylate sind: Titanmonopropoxytristearat, Titandiisopropoxydistearat, Titantripropoxyacetat, Zirkontetrabenzoat, Zirkondiisopropoxydipropionat, polymeres Dioxovanadinmonobutyrat.

Bevorzugt werden organische Metallsäureverbindungen mit geringer Eigenfarbe eingesetzt.

Die Harzkomponente der erfindungsgemäßen Gießharze sind Lösungen von 10 bis 30 Gew.-% Polymethylmethacrylat in Methylmethacrylat. Das Polymere ist entweder ein Homopolymeres des Methylmethacrylats oder ein Copolymeres des Methylmethacrylats mit ungesättigten Comonomeren, wie Vinylacetat, Styrol, Methylacrylat, Ethylacrylat, Butylacrylat, Cyclohexylacrylat, Ethylmethacrylat, Butylmethacrylat oder Cyclohexylmethacrylat. Die Polymerisationsmasse kann auch mehrfach ungesättigte Vernetzungsmittel, wie Ethylendimethacrylat, Propylendimethacrylat, Polyethylenglykoldimethacrylat, Divinylbenzol, Triallylcyanurat oder Diallylphthalat enthalten. Die für die erfindungsgemäßen Gießharze verwendeten Harze oder Harzgemische sind an sich bekannt (vgl. DE-PS 20 06 197).

Als Füllstoff enthalten die erfindungsgemäßen Gießharze feinteiliges Aluminiumhydroxid bzw. Aluminiumoxidhydrat. Die mittlere Korngröße des Füllstoffes liegt bei kleiner 100 μm. Vorteilhaft verwendet werden Aluminiumhydroxid bzw. Aluminiumoxidhydrate mit einem mittleren Teilchendurchmesser von 5 bis 40 μm.

Die erfindungsgemäßen Gießharze enthalten den Füllstoff in einer Menge von mindestens 20 Gew.-%, maximal 80 Gew.-%. Vorzugsweise liegt der Anteil zwischen 50 bis 70 Gew.-%.

Eingesetzt werden können zusätzlich auch verstärkende faserförmige Stoffe, wie z.B. Glasfasern oder Calciumtitanatfasern. Auch eine Pigmentierung mit anorganischen oder organischen Pigmenten ist möglich.

Die Herstellung der aluminiumhydroxid- bzw. aluminiumoxidhydrat-gefüllten Gießharze kann auf verschiedene Verfahrensweisen erfolgen, die nachstehend beispielhaft erläutert sind:

a) Der Kieselsäureester und ein Teil der organischen Metallsäureverbindung werden in einem Verhältnis von 2 : 1 bis 6 : 1, vorzugsweise von ca. 4 : 1 Gew.-%,der vorgefertigten Harzkomponente zugemischt. Dann wird das Aluminiumhydroxid bzw. Aluminiumoxidhydrat in das so modifizierte Harz eindispergiert. Danach wird die Organosiliciumverbindung mit einem weiteren Anteil der organischen Metallsäureverbindung in einem Verhältnis von 3 : 1 bis 7 : 1, vorzugsweise von ca. 5 : 1 Gew.-%, zugemischt. Anschließend erfolgt ggf. der Zusatz von Pigmenten.

b) Organosiliciumverbindung, Kieselsäureester und organische Metallsäureverbindung werden dem Harz zugemischt. Dann wird das Aluminiumhydroxid bzw. Aluminiumoxidhydrat in das modifizierte Harz eindispergiert. Anschließend erfolgt ggf. der Zusatz von Pigmenten.

c) Die organische Metallsäureverbindung, z.B. Zirkonacetylacetonat, wird vermischt mit Aluminiumhydroxid, z.B. im Verhältnis 1 : 1, in die Harzlösung eingearbeitet. Danach wird weiteres Aluminiumhydroxid bzw. Aluminiumoxidhydrat in das modifizierte Harz eindispergiert. Im Anschluß daran wird eine Zubereitung aus Kieselsäureester und Organosiliciumverbindung zudosiert. Anschließend erfolgt ggf. die Zugabe von Pigmenten.

Es ist zweckmäßig, Härtungskatalysatoren und ggf. Beschleuniger erst vor der Verarbeitung der Gießharze zu Kunststoffgegenständen und Formkörpern unterzumischen.

Die Härtung der Gießharze erfolgt auf an sich bekannte Weise, z.B. durch Zusatz von Peroxiden und ggf. Aktivatoren oder Beschleunigern, je nachdem, ob die Härtung bei erhöhter Temperatur oder bei Raumtemperatur durchgeführt werden soll.

Aus den erfindungsgemäßen aluminiumhydroxid- oder aluminiumoxidhydrat-gefüllten Gießharzen können alle Arten von Gegenständen oder Formteilen hergestellt werden, wie z.B. Halbzeugplatten, Küchenspülen und Sanitärartikel, wie Waschbecken, Brausetassen und Badewannen.

Beispiel 1

Gießharze und daraus gefertigte Prüfplatten wurden wie folgt hergestellt:

In 133,7 g einer 20 %igen Lösung eines Methylmethacrylathomopolymeren in Monomer mit mehrfach ungesättigtem Vernetzungsmittel wurden 3,36 g Tetraethylorthosilikat und 0,84 g Tetrabutylzirkonat gelöst. Dann wurden unter Verwendung eines Körbchenrührers bei 700 bis 800 U/min 210 g Aluminiumhydroxid (mittlere Korngröße 5 μm) im Verlauf von ca. 15 Minuten eindispergiert. Nach weiteren 15 Minuten Durchmischung wurden noch einmal 0,35 g Tetrabutylzirkonat und 1,75 g 3-Methacryloxypropyltrimethoxysilan zudosiert. Zur Einfärbung wurden dann 1,4 g Ultramarinblau eingerührt.

Die Gießharze wurden im Verlauf von 2 Stunden auf 20 °C temperiert. Dann wurde mit einem Brookfield-RV-Viskosimeter bei 10 und 50 U/min (Spindel 5) die Viskosität des Gießharzes gemessen.

Nach einer Standzeit von insgesamt 5 Stunden wurden 0,7 g eines Peroxidkatalysators und 0,35 g eines Beschleunigers eingerührt und eine Platte der Abmessungen 200 x 200 x 4 mm gegossen. Die Platte härtete bei Raumtemperatur innerhalb von 20 Minuten aus. Anschließend wurde sie noch 14 Stunden bei 80 °C nachgehärtet.

Zur Bestimmung der Biegefestigkeit nach DIN 53 452 und der Schlagzähigkeit nach DIN 53 453 wurden Normkörper der Abmessungen 50 x 6 x 4 mm ausgesägt. Die Messung erfolgte direkt und nach 6-stündiger Lagerung in 100 °C heißem Wasser.

Es wurden drei Vergleichsplatten unter Verwendung von

| A) | 140 g<br>210 g<br>1,4 g | 20 %ige Harzlösung<br>Aluminiumhydroxid (5 $\mu$m) und<br>Pigment, |
|---|---|---|
| B) | 137,9 g<br>210 g<br>0,35 g<br>1,75 g<br>1,4 g | 20 %ige Harzlösung<br>Aluminiumhydroxid<br>Tetrabutylzirkonat<br>Methacryloxypropyltrimethoxysilan<br>Pigment, |
| C) | 132 g<br>220 g<br>1,4 g | 20 %ige Harzlösung<br>Aluminiumhydroxid (37 $\mu$m)<br>Pigment |

hergestellt.

Die Meßwerte sind mit Ausnahme der Platte C in Tabelle 1 aufgeführt.

Beispiel 2

Nach den Maßnahmen des Beispiels 1 wurde eine weitere Prüfplatte hergestellt mit der Ausnahme, daß sowohl 3,36 g Tetraethylorthosilikat und 0,84 g Tetrabutylzirkonat als auch 0,35 g Tetrabutylzirkonat und 1,75 g 3-Methacryloxypropyltrimethoxysilan vor dem Eindispergieren des Aluminiumhydroxids der Harzlösung zugesetzt wurden.

Beispiel 3

Nach den Maßnahmen des Beispiels 1 wurde eine weitere Prüfplatte hergestellt mit der Ausnahme, daß anstelle von 3,36 g Tetraethylorthosilikat 3,36 g Ethylpolysilikat mit ca. 40 Gew.% $SiO_2$ verwendet wurden.

Beispiel 4

Nach den Maßnahmen des Beispiels 1 wurde eine weitere Prüfplatte hergestellt mit der Ausnahme, daß in 130,8 g der Harzlösung 1,26 g einer Mischung aus 1 Teil Zirkonacetylacetonat und 1 Teil Aluminiumhydroxid eingerührt, dann 210 g Aluminiumhydroxid mit einem mittleren Teilchen-Durchmesser von 5$\mu$m eindispergiert und dann eine Lösung aus 2,52 g Tetraethylorthosilikat, 2,10 g 3-Methacryloxypropyltrimethoxysilan und 4,62 g Methylmethacrylat zudosiert wurde.

Die Meßergebnisse der Beispiele 2 bis 4 sind in Tabelle 2 aufgelistet.

Beispiel 5

Nach den Maßnahmen des Beispiels 1 wurde eine weitere Prüfplatte hergestellt, wobei in 125,4 g Harzlösung 3,52 g Tetraethylorthosilikat und 0,88 g Tetrabutylzirkonat gelöst wurden. Anstelle von 210 g Aluminiumhydroxid mit einem mittleren Teilchen-Durchmesser von 5 $\mu$m wurden 220 g Aluminiumhydroxid mit einem mittleren Teilchen-Durchmesser von 37 $\mu$m eindispergiert. Danach wurden 0,37 g Tetrabutylzirkonat und 1,83 g 3-Methacryloxypropyltrimethoxysilan zudosiert.

Beispiel 6

Nach den Maßnahmen des Beispiels 1 wurde eine weitere Prüfplatte hergestellt mit der Ausnahme, daß in 122,3 g der Harzlösung 1,26 g einer Mischung aus 1 Teil Zirkonacetylacetonat und 1 Teil Aluminiumhydroxid eingerührt, dann 220 g Aluminiumhydroxid mit einem mittleren Teilchen-Durchmesser von 37 $\mu$m eindispergiert wurden und dann eine Lösung aus 2,64 g Tetraethylorthosilikat, 2,2 g 3-Methacryloxypropyltrimethoxysilan und 4,84 g Methylmethacrylat zudosiert wurde.

Die Meßergebnisse der Beispiele 5 und 6 sowie der Platte C sind in Tabelle 3 aufgelistet.

TABELLE 1

| BEISPIEL | GIESSHARZ | | PRÜFPLATTE | | | |
| | VISKOSITÄT (mPa s) | | BIEGEFESTIGKEIT (N/mm^2) | | SCHLAGZÄHIGKEIT (kJ/m^2) | |
| | 10 U/min | 50 U/min | DIREKT | 6 h 100 C H2O | DIREKT | 6 h 100 C H2O |
| 1 | 5600 | 4900 | 100 | 90 | 4.6 | 3.9 |
| A (VERGLEICHSBEISPIEL) | 13200 | >8000 | 79 | 54 | 3.1 | 1.8 |
| B (VERGLEICHSBEISPIEL) | 6000 | 4700 | 100 | 68 | 3.9 | 2.8 |

TABELLE 2

| BEISPIEL | GIESSHARZ | | PRÜFPLATTE | | | |
|----------|-----------|-----------|-----------|-----------|-----------|-----------|
| | VISKOSITÄT (mPa s) | | BIEGEFESTIGKEIT (N/mm^2) | | SCHLAGZÄHIGKEIT (kJ/m^2) | |
| | 10 U/min | 50 U/min | DIREKT | 6 h 100 C H2O | DIREKT | 6 h 100 C H2O |
| 2 | 4200 | 4000 | 107 | 92 | 4.4 | 4.0 |
| 3 | 6200 | 4500 | 103 | 90 | 3.9 | 3.9 |
| 4 | 5100 | 3600 | 103 | 89 | 4.4 | 3.7 |

TABELLE 3

| BEISPIEL | GIESSHARZ | | PRÜFPLATTE | | | |
|---|---|---|---|---|---|---|
| | VISKOSITÄT (mPa s) | | BIEGEFESTIGKEIT (N/mm^2) | | SCHLAGZÄHIGKEIT (kJ/m^2) | |
| | 10 U/min | 50 U/min | DIREKT | 6 h 100 C H2O | DIREKT | 6 h 100 C H2O |
| 5 | 9200 | >8000 | 77 | 60 | 3.4 | 2.4 |
| 6 | 5400 | 5000 | 85 | 76 | 3.4 | 3.2 |
| C (VERGLEICHSBEISPIEL) | 14800 | >8000 | 62 | 53 | 2.1 | 1.7 |

**Patentansprüche**

**Patentansprüche für folgende Vertragsstaaten : AT, BE, DE, FR, GB, IT, NL, SE**

1. Gießharze auf Basis von fließfähigen härtbaren Methacrylsäureestern und feinteiligem Aluminiumhydro-

8

xid oder Aluminiumoxidhydrat, enthaltend zusätzlich mindestens je
eine Organosiliciumverbindung mit ethylenisch ungesättigter Doppelbindung,
einen Kieselsäureester
und eine organische Metallsäureverbindung von Metallen der IV. und/oder V. Nebengruppe des Periodischen Systems der Elemente.

**2.** Gießharze gemäß Anspruch 1, dadurch gekennzeichnet, daß sie als Organosiliciumverbindung mit einer ethylenisch ungesättigten Gruppe 3-Methacryloxypropyltrialkoxysilane enthalten.

**3.** Gießharze gemäß Anspruch 1, dadurch gekennzeichnet, daß sie als Organosiliciumverbindung mit einer ethylenisch ungesättigten Gruppe Vinyltrialkoxysilane enthalten.

**4.** Gießharze gemäß einem der Ansprüche 1 bis 3, dadurch gekennzeichnet, daß sie als Kieselsäureester Tetraethylorthosilikat enthalten.

**5.** Gießharze gemäß einem der Ansprüche 1 bis 3, dadurch gekennzeichnet, daß sie als Kieselsäureester Ethylpolysilikat mit einem $SiO_2$-Gehalt von ca. 40 % enthalten.

**6.** Gießharze gemäß einem der Ansprüche 1 bis 5, dadurch gekennzeichnet, daß sie als organische Metallsäureverbindung Verbindungen aus der Gruppe der Ester der Titansäure, Vanadinsäure und Zirkonsäure enthalten.

**7.** Gießharze gemäß einem der Ansprüche 1 bis 5, dadurch gekennzeichnet, daß als organische Metallsäureverbindung eine Metallsäurekomplexverbindung eingesetzt wird.

**8.** Gießharze gemäß einem der Ansprüche 1 bis 5 und 7, dadurch gekennzeichnet, daß sie als Metallsäurekomplexverbindung Zirkon-tetra-acetylacetonat enthalten.

**9.** Gießharze gemäß einem der Ansprüche 1 bis 8, dadurch gekennzeichnet, daß sie das Organosilan in Anteilen von 0,1 bis 4 Gew.-%, vorzugsweise 0,2 bis 1,5 Gew.-%, bezogen auf den Anteil des Füllstoffes, enthalten.

**10.** Gießharze gemäß einem der Ansprüche 1 bis 9, dadurch gekennzeichnet, daß sie den Kieselsäureester in Anteilen von 0,1 bis 5 Gew.-%, vorzugsweise 0,2 bis 2,0 Gew.-%, bezogen auf den Anteil des Füllstoffes, enthalten.

**11.** Gießharze gemäß einem der Ansprüche 1 bis 10 dadurch gekennzeichnet, daß sie die organische Metallsäureverbindung in Anteilen von 0,1 bis 2 Gew.-%, vorzugsweise 0,2 bis 0,8 Gew.-%, bezogen auf den Anteil des Füllstoffes, enthalten.

**12.** Kunststoffgegenstände und Formkörper, hergestellt aus Gießharzen gemäß einem der Ansprüche 1 bis 11.

**Patentansprüche für folgenden Vertragsstaat : ES**

**1.** Verfahren zur Herstellung von Gießharzen auf Basis von fließfähigen, härtbaren Methacrylsäureestern und feinteiligem Aluminiumhydroxid oder Aluminiumoxidhydrat durch Vermischen des Aluminiumhydroxids oder Aluminiumoxidhydrats mit Lösungen von Polymethylmethacrylat in Methylmethacrylat unter Zusatz von mindestens je einer Organosiliciumverbindung mit ethylenisch ungesättigter Doppelbindung, einem Kieselsäureester und einer organischen Metallsäureverbindung von Metallen der IV. und/oder V. Nebengruppe des Periodischen Systems der Elemente, **dadurch gekennzeichnet,** daß man der Harzlösung die Metallsäureverbindung und gegebenenfalls das Silan und den Kieselsäureester untermischt, in das erhaltene Gemisch das Aluminiumhydroxid oder Aluminiumoxidhydrat eindispergiert und anschließend gegebenenfalls das Silan und/oder den Kieselsäureester untermischt.

**2.** Verfahren zur Herstellung von Gießharzen gemäß Anspruch 1, dadurch gekennzeichnet, daß in der ersten Verfahrensstufe nur eine Teilmenge der Metallsäureverbindung untergemischt wird und die Restmenge nach Zusatz des Aluminiumhydroxids oder Aluminiumoxidhydrats mit dem Silan und/oder

EP 0 253 211 B1

dem Kieselsäureester zugefügt wird.

**Claims**

**Claims for the following Contracting States : AT, BE, DE, FR, GB, IT, NL, SE**

1. Casting resins based on flowable hardenable methacrylic acid esters and finely divided aluminium hydroxide or aluminium oxyhydrate, containing additionally at least each of
   an organosilicon compound with ethylenically unsaturated double bonding,
   a silicic acid ester, and
   an organic metal acid compound of metals of the IVth or Vth sub groups of the Periodic System of the Elements.

2. Casting resins according to Claim 1, characterised in that they contain 3-methacryloxypropyl trialkoxy silanes as organosilicon compound with an ethylenically unsaturated group.

3. Casting resins according to Claim 1, characterised in that they contain vinyl trialkoxysilanes as organosilicon compounds with an ethylenically unsaturated group.

4. Casting resins according to one of Claims 1 to 3, characterised in that they contain tetraethyl orthosilicate as silicic acid ester.

5. Casting resins according to one of Claims 1 to 3, characterised in that they contain ethyl polysilicate with an $SiO_2$ content of about 40% as silicic acid ester.

6. Casting resins according to one of Claim 1 to 5, characterised in that they contain as organic metal acid compound, compounds from the group of esters of titanic acid, vanadic acid and zirconic acid.

7. Casting resins according to one of Claims 1 to 5, characterised in that a metal acid complex compound is employed as metal acid compound.

8. Casting resins according to one of Claims 1 to 5 and 7, characterised in that they contain zirconiumtetraacetylacetonate as metal acid complex compound.

9. Casting resins according one of Claims 1 to 8, characterised in that they contain the organosilane in amounts of 0.1 to 4 % by weight, preferably 0.2 to 1.5 % by weight, related to the amount of the filler.

10. Casting resins according to one of Claims 1 to 9, characterised in that they contain the silicic acid ester in amounts of 0.1 to 5 % by weight, preferably 0.2 to 2.0 % by weight related to the amount of filler.

11. Casting resins according to one of Claims 1 to 10, characterised in that they contain the organic metal acid compound in amounts of 0.1 to 2 % by weight, preferably 0.2 to 0.8 % by weight, related to the amount of the filler.

12. Synthetic resin objects and shaped bodies produced from casting resins according to one of Claims 1 to 11.

**Claims for the following Contracting State : ES**

1. Process for the production of casting resins based on flowable hardenable methacrylic acid esters and finely divided aluminium hydroxide or aluminium oxyhydrate by mixing of aluminium hydroxide or aluminium oxyhydrate with solutions of polymethyl methacrylate in methyl methacrylate subject to addition of at least each of an organosilicon compound with ethylenically unsaturated double bonding, a silicic acid ester and an organic metal acid compound of metals of the IVth and/or Vth sub-group of the periodic system of the elements, characterised in that the metal acid compound and possibly the silane and silicic acid ester is mixed into the resin solution, the aluminium hydroxide or aluminium oxyhydrate is dispersed in the mixture obtained and then possibly the silane and/or the silicic acid ester is mixed in.

10

2. Process for the production of casting resins according to Claim 1, characterised in that, in the first procedural step, only one component part of the metal acid compound is mixed in and the residual amount is supplied after addition of the aluminium hydroxide or aluminium oxyhydrate with the silane and/or the silicic acid ester.

## Revendications
## Revendications pour les Etats contractants suivants : AT, BE, DE, FR, GB, IT, NL, SE

1. Résines à couler à base d'esters fluides et durcissables de l'acide méthacrylique et d'hydroxyde d'aluminium ou d'oxyhydrate d'aluminium finement divisé, contenant en outre au moins un composé organique du silicium ayant une double liaison à insaturation éthylénique, au moins un ester de l'acide silicique et au moins un composé organique d'un acide métallique dérivé de métaux du IVème et/ou du Vème groupes secondaires du Tableau Périodique des Eléments.

2. Résines à couler selon la revendication 1, caractérisées en ce qu'elles contiennent en tant que composé organique du silicium ayant un groupe à insaturation éthylénique des 3-méthacryloxypropyltrialcoxysilanes.

3. Résines à couler selon la revendication 1, caractérisées en ce qu'elles contiennent en tant que composé organique du silicium ayant un groupe à insaturation éthylénique des vinyltrialcoxysilanes.

4. Résines à couler selon l'une des revendications 1 à 3, caractérisées en ce qu'elles contiennent en tant qu'ester de l'acide silicique de l'orthosilicate de tétraéthyle.

5. Résines à couler selon l'une des revendications 1 à 3, caractérisées en ce qu'elles contiennent en tant qu'ester de l'acide silicique un polysilicate d'éthyle ayant une teneur en $SiO_2$ d'environ 40 %.

6. Résines à couler selon l'une des revendications 1 à 5, caractérisées en ce qu'elles contiennent en tant que composé organique d'un acide métallique des composés choisis dans le groupe des esters de l'acide titanique, de l'acide vanadique et de l'acide zirconique.

7. Résines à couler selon l'une des revendications 1 à 5, caractérisées en ce qu'on utilise comme composé organique d'un acide métallique un composé complexe d'un acide métallique.

8. Résines à couler selon l'une des revendications 1 à 5 et 7, caractérisées en ce qu'elles contiennent en tant que composé complexe d'un acide métallique du tétraacétylacétonate de zirconium.

9. Résines à couler selon l'une des revendications 1 à 8, caractérisées en ce qu'elles contiennent l'organosilane en quantités de 0,1 à 4 et de préférence de 0,2 à 1,5 % en poids par rapport à la charge.

10. Résines à couler selon l'une des revendications 1 à 9, caractérisées en ce qu'elles contiennent l'ester de l'acide silicique en quantités de 0,1 à 5 et de préférence de 0,2 à 2 % en poids par rapport à la charge.

11. Résines à couler selon l'une des revendications 1 à 10, caractérisées en ce qu elles contiennent le composé organique d'un acide métallique en quantités de 0,1 à 2 et de préférence de 0,2 à 0,8 % en poids par rapport à la charge.

12. Objets en matière plastique et objets moulés fabriqués à partir de résines à couler selon l'une des revendications 1 à 11.

## Revendications pour l'Etat contractant suivant : ES

1. Procédé de préparation de résines à couler à partir d'esters durcissables et fluides de l'acide méthacrylique et d'hydroxyde d'aluminium ou d'oxyhydrate d'aluminium finement divisé, par mélange de l'hydroxyde d'aluminium ou de l'oxyhydrate d'aluminium à des solutions de poly(méthacrylate de méthyle) dans du méthacrylate de méthyle, avec addition d'au moins un composé organique du silicium présentant une double liaison à insaturation éthylénique, d'au moins un ester de l'acide silicique et d'au moins un composé organique d'un acide métallique dérivé de métaux des groupes secondaires IV et/ou V du Tableau Périodique des Eléments, caractérisé en ce qu'on mélange à la solution de résine le composé de l'acide métallique et éventuellement le silane et l'ester de l'acide silicique, on introduit dans le mélange obtenu, tout en dispersant, l'hydroxyde d'aluminium ou l'oxyhydrate d'aluminium, puis éventuellement on mélange le silane et/ou l'ester de l'acide silicique.

2. Procédé de préparation de résines à couler selon la revendication 1, caractérisé en ce que, dans la première étape du procédé, on ne mélange qu'une quantité partielle du composé acide métallique, la quantité résiduelle étant, avec le silane et/ou l'ester de l'acide silicique, ajoutée après addition de l'hydroxyde d'aluminium ou de l'oxyhydrate d'aluminium.